# EUROPEAN PATENT APPLICATION

(11) **EP 4 841 132 A1**
(43) Date of publication of application: **18.11.2026**
(21) Application number: 24916452.6
(22) Date of filing: 23.09.2024
(51) Int. Cl.: F16H 59/60, B60W 20/15

(54) **SAFETY STRATEGY DETERMINING METHOD AND APPARATUS, VEHICLE, AND STORAGE MEDIUM**

(30) Priority: 08.01.2024 CN 202410029867
(71) Applicant: Dongfeng Motor Group Co., Ltd, Wuhan, Hubei 430056 (CN)
(72) Inventor: ZHANG, Li, Wuhan, Hubei 430056 (CN); WU, Zhaosu, Wuhan, Hubei 430056 (CN); WANG, Wei, Wuhan, Hubei 430056 (CN); CEN, Jiepeng, Wuhan, Hubei 430056 (CN); LIU, Hui, Wuhan, Hubei 430056 (CN)
(74) Representative: Valet Patent Services Limited
(86) International application number: PCT/CN2024/120308
(87) International publication number: WO 2025/148400

(57) **Abstract**

A safety strategy determining method, applied to a Hybrid Transmission Control Unit (HTCU), comprising: monitoring an environmental signal in a hybrid transmission; in a case that an error occurs in the environmental signal, determining an abnormal event corresponding to the environmental signal; analyzing the abnormal event, and determining a safety state corresponding to the abnormal event; determining a safety strategy corresponding to the abnormal event on the basis of the safety state and a current gear of vehicle, wherein the current gear includes one gear of different driving modes, and the safety strategy includes at least one of the following: maintaining the current gear, reverting a gear of the hybrid transmission into the current gear, and shifting from the current gear to a corresponding downshifted gear; sending a gear shifting request carrying the safety strategy to a Vehicle Electronic Control Unit (VECU), wherein the gear shifting request is used for requesting the VECU to switch a target gear on the basis of the safety strategy; and shifting the gear of the hybrid transmission to the target gear. The problem of over-protection or under-protection in the hybrid transmission is avoided, and therefore the driving safety is improved. A safety strategy determining apparatus is also provided.

## Description

### CROSS-REFERENCE TO RELATED APPLICATION

The application is based on and claims the priority of Chinese patent application No. 202410029867.3 filed on January 08, 2024, the entire contents of which are incorporated herein by reference.

### TECHNICAL FIELD

The invention relates to the technical field of vehicle control, and in particular to a method and apparatus for determining a safety strategy, a vehicle, and a storage medium.

### BACKGROUND

During a power-on or power-off self-learning process or during driving, if a gear shift failure occurs without real-time monitoring, a safe mode cannot be entered after the gear shift failure, thereby causing damage to a transmission, and even leading to an unexpected deceleration of a vehicle, resulting in a safety accident. In addition, in most existing safe modes, a current gear is maintained or a gear shifting is prohibited. For a complex hybrid transmission, problems of over-protection or under-protection may occur.

### SUMMARY

In view of this, the invention provides a method and apparatus for determining a safety strategy, a vehicle, and a storage medium.

The technical solution of the invention is implemented as follows.

In a first aspect, the invention provides a method for determining a safety strategy, applied to a Hybrid Transmission Control Unit (HTCU). The method includes: monitoring an environmental signal in a hybrid transmission; the environmental signal comprising at least one of: a voltage signal, a current signal, a temperature signal, a sensor signal, and a positional signal; determining, in a case that an error occurs in the environmental signal, an abnormal event corresponding to the environmental signal; analyzing the abnormal event, and determining a safety state corresponding to the abnormal event; determining a safety strategy corresponding to the abnormal event on the basis of the safety state and a current gear of vehicle; the current gear comprising a gear of different driving modes; the safety strategy comprising at least one of: maintaining the current gear, reverting a gear of the hybrid transmission into the current gear, and shifting the current gear into a corresponding downshiftedgear; sending a gear shifting request carrying the safety strategy to a Vehicle Electronic Control Unit (VECU), the gear shifting request being used to request the VECU to switch a target gear on the basis of the safety strategy; shifting the gear of the hybrid transmission into the target gear.

In a second aspect, the invention provides a safety strategy determining method, applied to a Vehicle Electronic Control Unit (VECU). The method includes: receiving a gear shifting request carrying a safety strategy sent by a Hybrid Transmission Control Unit (HTCU); the safety strategy being determined according to a safety state corresponding to an abnormal event and a current gear of vehicle; the abnormal event corresponding to an error occurring to an environmental signal in a hybrid transmission; the current gear comprising a gear of different driving modes; maintaining, in a case that the safety strategy is to maintain the current gear, the target gear unchanged; shifting, in a case that the safety strategy is to revert the gear of the hybrid transmission into the current gear, the target gear into the current gear; shifting, in a case that the safety strategy is to shift the current gear into a corresponding downshifted gear, the target gear into the downshifted gear.

In a third aspect, the invention provides a safety strategy determining apparatus. The apparatus includes: a monitoring module, configured for monitoring an environmental signal in a hybrid transmission; the environmental signal comprising at least one of: a voltage signal, a current signal, a temperature signal, a sensor signal, and a positional signal; a first determining module, configured for determining, in a case that an error occurs in the environmental signal, an abnormal event corresponding to the environmental signal; a second determining module, configured for analyzing the abnormal event, and determining a safety state corresponding to the abnormal event; a third determining module, configured for determining a safety strategy corresponding to the abnormal event on the basis of the safety state and a current gear of vehicle; the current gear comprising a gear of different driving modes; the safety strategy comprising at least one of: maintaining the current gear, reverting a gear of the hybrid transmission into the current gear, and shifting the current gear into a corresponding downshiftedgear; a first sending module, configured for sending a gear shifting request carrying the safety strategy to a Vehicle Electronic Control Unit (VECU), the gear shifting request being used to request the VECU to switch a target gear on the basis of the safety strategy; a first shifting module, configured for shifting the gear of the hybrid transmission into the target gear.

In a fourth aspect, the invention provides a safety strategy determining apparatus. The apparatus includes: a first receiving module, configured for receiving a gear shifting request carrying a safety strategy sent by a Hybrid Transmission Control Unit (HTCU); the safety strategy being determined according to a safety state corresponding to an abnormal event and a current gear of vehicle; the abnormal event corresponding to an error occurring to an environmental signal in a hybrid transmission; the current gear comprising a gear of different driving modes; a second shifting module, configured for maintaining, in a case that the safety strategy is to maintain the current gear, a target gear unchanged; a third shifting module, further configured for shifting, in a case that the safety strategy is to revert the gear of the hybrid transmission into the current gear, the target gear into the current gear; a fourth shifting module, further configured for shifting, in a case that the safety strategy is to shift the current gear into a corresponding downshifted gear, the target gear into the downshifted gear.

In a fifth aspect, the invention provides a vehicle, comprising a memory and a controller, wherein the memory stores a computer program executable on the controller, and the controller, when executing the program, implements the steps in the above method.

In a sixth aspect, the invention provides a computer-readable storage medium, on which a computer program is stored. The computer program, when executed by a processor, implements the steps in the above method .

In the invention, a Hybrid Transmission Control Unit (HTCU), when monitoring an error occurred to an environmental signal, determines an abnormal event corresponding to the environmental signal; analyzes the abnormal event to determine a safety state corresponding to the abnormal event; then determines a corresponding safety strategy according to the safety state and a current gear, and sends a gear shifting request carrying the safety strategy to the VECU, such that the VECU switches a target gear according to the safety strategy; and the HTCU shifts a gear of the hybrid transmission into the target gear. In this way, a gear shift failure is discovered in time by monitoring an environmental signal, and a safety strategy is determined in a targeted manner according to an abnormal event corresponding to the environmental signal. The invention is applicable to a complex hybrid transmission, meets the requirements for monitoring a gear shift failure and for a safety strategy in different driving modes, and avoids the problems of over-protection or under-protection, thereby improving driving safety.

It should be understood that the foregoing general description and the following detailed description are merely exemplary and explanatory and are not restrictive of the technical solutions of the invention.

### BRIEF DESCRIPTION OF DRAWINGS

In the drawings (which are not necessarily drawn to scale), similar reference numerals may describe similar components in different views. Similar reference numerals with different letter suffixes may represent different examples of similar components. The drawings generally illustrate, by way of example and not limitation, various embodiments discussed herein.
FIG. 1 is a schematic diagram of a gear shifting structure of vehicle according to an embodiment of the invention;
FIG. 2 is a first flow chart of a method for determining a safety strategy according to an embodiment of the invention;
FIG. 3 is a second flow chart of a method for determining a safety strategy according to an embodiment of the invention;
FIG. 4 is a third flow chart of a method for determining a safety strategy according to an embodiment of the invention;
FIG. 5 is a schematic structural diagram of a Fault Tree Analysis (FTA) for a gear shift failure according to an embodiment of the invention;
FIG. 6 is a first schematic structural diagram of an apparatus for determining a safety strategy according to an embodiment of the invention;
FIG. 7 is a second schematic structural diagram of an apparatus for determining a safety strategy according to an embodiment of the invention; and
FIG. 8 is a schematic diagram of a hardware entity of a vehicle according to an embodiment of the invention.

### DETAILED DESCRIPTION

Exemplary embodiments of the present disclosure will be described in more detail below with reference to the accompanying drawings. Although the accompanying drawings show exemplary embodiments of the invention, it should be understood that the invention may be implemented in various forms and should not be limited by the specific embodiments set forth herein. On the contrary, these embodiments are provided to enable a more thorough understanding of the invention, and to fully convey the scope of the present disclosure to those skilled in the art.

In the following description, numerous specific details are set forth to provide a more thorough understanding of the invention. However, it will be apparent to those skilled in the art that the invention may be practiced without one or more of these details. In other instances, some technical features well known in the art are not described to avoid confusion with the present application; that is, not all features of actual embodiments are described herein, and well-known functions and structures are not described in detail.

It should be understood that although the terms first, second, third, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the invention. The discussion of a second element, component, region, layer or section does not imply that the first element, component, region, layer or section is necessarily present in the present application.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will also be understood that the terms "comprise" and/or "include", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of the associated listed items.

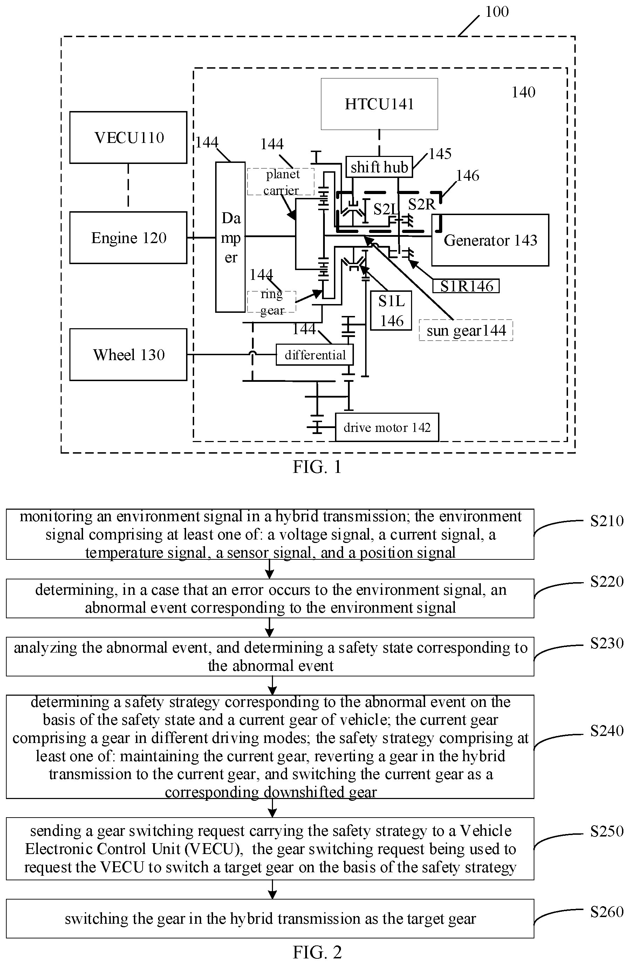

An embodiment of the invention provides a vehicle gear shifting structure 100. As shown in FIG. 1, the vehicle gear shifting structure 100 includes a Vehicle Electronic Control Unit (VECU) 110 for sending a target gear, an engine 120 for providing power to a vehicle, a wheel 130 for driving the vehicle to travel, and a hybrid multi-speed transmission 140 for switching gears of the vehicle. Optionally, the hybrid multi-speed transmission 140 includes: a Hybrid Transmission Control Unit (HTCU) 141 for controlling a gear shifting; a drive motor 142 for driving the vehicle to travel; a generator 143 for providing a power supply, a gear transmission mechanism 144 (including a planet carrier, fixed-axis gears, a ring gear, a differential assembly, a sun gear, bearings, etc.) for transmitting motion and power, a shift actuator 145 (including a shift motor, a shift hub, shift forks, synchronizers, etc.) for implementing a gear shifting operation, and a synchronizer 146 (S1L, S1R, S1L and S2R) for shortening a gear shifting time.

A power transmission path includes: a series mode, in which the synchronizer S2L is engaged; a parallel (direct drive) mode, which includes four gears, ① a first gear of a direct drive mode in which the synchronizers S1R and S2L are engaged, ② a second gear of the direct drive mode in which the synchronizers S1R and S2R are engaged, ③ a third gear of the direct drive mode in which the synchronizers S1L and S2L are engaged, ④ a fourth gear of the direct drive mode in which the synchronizers S1L and S2R are engaged; an Electric Continuously Variable Transmission (ECVT) mode, which includes four gears, ECVT 1-1 gear or ECVT 1-2 gear of which the synchronizer S1R is engaged, ECVT 2-2 gear or ECVT 2-1 gear of which the synchronizer S1L is engaged; and an Electric Vehicle (EV) mode, the ECVT mode including an EV working condition. In the EV mode, a power is not output through a synchronizer, and thus no out-of-gear judgment is required.

At present, in most safe modes in the related art, a current gear is protected or a gear shifting is prohibited, and a corresponding safe mode cannot be determined in a targeted manner for the above complex hybrid multi-speed transmission, and thus problems of over-protection or under-protection may be may be caused. Moreover, in existing safe modes, in-gear and out-of-gear conditions are not distinguished, or an in-gear or out-of-gear status is judged only through a shift state signal, to result in untimely or inaccurate judgment of a gear shift failure, thereby leading to problems such as untimely determination of a safety strategy or inaccurate safety strategy, which further causes damage to the transmission or even a safety accident.

Based on the above related problems, an embodiment of the invention provides a method for determining a safety strategy. An HTCU determines a corresponding abnormal event by monitoring an environmental signal; analyzes the abnormal event to determine a safety state corresponding to the abnormal event; then determines a corresponding safety strategy according to the safety state and a current gear, and sends a gear shifting request carrying the safety strategy to a Vehicle Electronic Control Unit (VECU), such that the VECU switches a target gear according to the safety strategy; and the HTCU shifts a gear of a hybrid transmission into the target gear. In this way, a gear shift failure is discovered in time by monitoring an environmental signal, and a safety strategy is determined in a targeted manner according to an abnormal event corresponding to the environmental signal. The invention is applicable to a complex hybrid transmission, meets the requirements for monitoring a gear shift failure and for a safety strategy in different driving modes, and avoids the problems of over-protection or under-protection, thereby improving driving safety.

An embodiment of the invention provides a method for determining a safety strategy, applied to a HTCU, as shown in FIG. 2. The method includes the following steps S210 to S260.

In Step S210, an environmental signal in a hybrid transmission is monitored; the environmental signal comprising at least one of: a voltage signal, a current signal, a temperature signal, a sensor signal, and a positional signal.

Here, the environmental signal is used to represent signals such as a temperature, a voltage, a current, and a position in the hybrid transmission. Optionally, the voltage signal may include at least one of: a phase midpoint voltage signal, a shift motor bus voltage signal, a Metal-Oxide-Semiconductor Field-Effect Transistor (MOSFET) voltage signal, and a power supply voltage signal; the current signal may include: a shift motor current signal; the temperature signal may include: a MOSFET temperature signal; the sensor signal may include: a Hall sensor signal and a Pulse Width Modulation (PWM) signal; and the positional signal includes: a positional signal of a shift motor and a shift hub positional difference signal.

In Step S220, in a case that an error occurs in the environmental signal, an abnormal event corresponding to the environmental signal is determined.

It can be understood that an abnormal event is a result of environmental signal monitoring, and each environmental signal corresponds to one abnormal event. For example, if the HTCU monitors an abnormality in a phase midpoint voltage, it indicates a phase short circuit or open circuit of a shift motor; if the HTCU monitors an excessively high current of the shift motor, it is indicated that a hardware or software of a shift hub motor is over current.

It should be noted that the HTCU can simultaneously monitor a plurality of environmental signals and determine a plurality of abnormal events.

In an embodiment of the invention, the abnormal event may be derived through Fault Tree Analysis (FTA). Fault Tree Analysis (FTA) is used to analyze an undesired state in a system, such as an abnormal event. After an abnormal event is derived by using the fault tree analysis method, a corresponding environmental signal is set for each abnormal event. In a case that an error of the environmental signal is monitored, the corresponding abnormal event is activated.

The abnormal event of gear shift failure is derived by in advance using the fault tree analysis method, so that corresponding measures can be taken to improve a reliability and stability of a system.

In Step S230, the abnormal event is analyzed, and a safety state corresponding to the abnormal event is determined.

Here, the safety state corresponding to the abnormal event may be determined by analyzing and classifying an impact of the abnormal event on a gear shift. It should be noted that a plurality of abnormal events may correspond to a same safety state.

In Step S240, a safety strategy corresponding to the abnormal event is determined, on the basis of the safety state and a current gear of vehicle. The current gear comprises a gear of different driving modes. The safety strategy comprises at least one of: maintaining the current gear, reverting a gear of the hybrid transmission into the current gear, and shifting the current gear into a corresponding downshifted gear.

In an embodiment of the invention, the safety strategy refers to a safety measure to be implemented after a gear engagement failure occurs in the vehicle. The different driving modes include: a series mode, a direct drive mode, an ECVT mode and an EV mode.

It should be noted that the downshifted gear refers to a gear that is lower in level than the current gear and adjacent to the current gear. It should be understood that when a gear is downshifted, the gear must be shifted down to the nearest lower gear first, and then to the second nearest lower gear, and skipping gears (for example, a direct engagement from 3rd gear to 1st gear) is not allowed.

In Step S250, a gear shifting request carrying the safety strategy is sent to a Vehicle Electronic Control Unit (VECU). The gear shifting request is used to request the VECU to switch a target gear on the basis of the safety strategy.

Here, the target gear refers to a gear to be shifted into that is sent by the VECU to the HTCU.

In Step S260, the gear of the hybrid transmission is shifted into the target gear.

In an embodiment of the invention, after the VECU switches the target gear, the VECU sends the target gear to the HTCU, and the HTCU shifts the current gear of the hybrid transmission into the target gear.

In an embodiment of the invention, the HTCU determines a corresponding abnormal event by monitoring an environmental signal; analyzes the abnormal event to determine a safety state corresponding to the abnormal event; then determines a corresponding safety strategy according to the safety state and a current gear, and sends a gear shifting request carrying the safety strategy to the VECU, such that the VECU switches a target gear according to the safety strategy; and the HTCU shifts a gear of the hybrid transmission into the target gear. In this way, a gear shift failure is discovered in time by monitoring an environmental signal, and a safety strategy is determined in a targeted manner according to an abnormal event corresponding to the environmental signal. Thus, the invention is applicable to a complex hybrid transmission, is capable of monitoring a gear shift failure and determining a safety strategy in different driving modes, and avoids the problems of over-protection or under-protection, thereby improving driving safety.

In some embodiments, an implementation of step S240 may include the following steps S241 to S243.

In Step S241, in a case that the safety state is that a shift motor is turned off, it is determined to maintain the current gear;

It should be understood that, in a case that the shift motor is turned off, a gear shifting cannot be performed, and the HTCU needs to maintain the current gear.

In Step S242, in a case that the safety state is that the shift motor is not turned off and a gear shifting is sticked, it is determined to revert the gear of the hybrid transmission back to the current gear.

Here, situations where a gear shifting is sticked include a gear disengagement and a gear engagement. The gear disengagement generally does not get a sticking under a very low residual torque of the synchronizer; the gear engagement sticking generally occurs in the following situations: shifting from the series mode into the first gear of the direct drive mode, shifting from the ECVT mode into the direct drive mode, shifting from the EV mode into the ECVT mode, and shifting from the EV mode to the fourth gear of the direct drive mode.

In Step S243, in a case that the safety state is that the shift motor is not turned off and a gear shifting is available, it is determined to shift the current gear into a corresponding downshifted gear.

In an embodiment of the invention, in a case that the shift motor is not turned off and a gear shifting is available, the HTCU needs to enter a gear that is safe and does not affect driving in advance. Therefore, a downshift process needs to be performed on the current gear.

In an embodiment of the invention, the safety strategy corresponding to the abnormal event is determined in a targeted manner according to different safety states and gears in various driving modes, and the downshift process is optimized. In this way, in a case that a gear shift failure occurs, the safety strategy can be accurately determined, to avoid the problems of over-protection or under-protection, further improving driving safety.

In some embodiments, an implementation of step S241 may include the steps S2411 to S2412.

In Step S2411, in a case that the vehicle has completed a gear shifting, the current gear is maintained.

Here, a completion of gear shifting of the vehicle means that the vehicle is in gear.

In Step S2412, in a case that the vehicle has not completed a gear shifting, it is requested to cut off a power and maintain the current gear.

Here, the vehicle not completing the gear shifting means that the vehicle is out of gear.

It should be understood that after the shift motor is turned off, if the HTCU does not complete the gear shifting, the vehicle is in a neutral gear. At this time, a driving of the vehicle may cause a safety problem. Therefore, it is necessary to judge whether the vehicle is in gear. In a case that the vehicle is out of gear, the HTCU requests to cut off the power, and the VECU keeps the target gear unchanged and limits an output torque to be 0.

In addition, after the shift motor is turned off, in a case that the vehicle is driving in a gear of the direct drive mode, if the engine stalls due to a low engine speed or a driver actively stops the vehicle, a drive motor (such as a P3 motor) is allowed to directly drive the vehicle to stop at a safe point.

In an embodiment of the invention, after the safety strategy is determined, it is judged whether the vehicle has completed the gear shifting, and further safety measures are taken in time in a case that the vehicle has not completed gear shifting (out of gear), so as to avoid driving safety problems caused by the vehicle being out of gear when the safety strategy is executed.

In some embodiments, the implementation of step S241 further includes steps S310 to S330.

In Step S310: a completion degree of a shift hub angle is determined during a gear shifting process.

Here, the completion degree of the shift hub angle refers to a progress of the shift hub angle reaching a target shift hub angle, and the completion degree may be represented by a gear shifting process signal HTCU_GearProgress.

In Step S320, it is determined, in a case that the completion degree meets a preset threshold, that the vehicle has completed a gear shifting.

In Step S330, it is determined, in a case that the completion degree does not meet the preset threshold, that the vehicle has not completed a gear shifting.

Here, the preset threshold may be set in a hardware design stage. The preset threshold may be less than or equal to a first threshold or greater than or equal to a second threshold. Generally, the first threshold is k%, and the second threshold is (100-k)%.

Optionally, a value of k may be defined according to an allowable deviation range of the shift hub angle required by the design. For example, if a required change of the shift hub angle is A degrees, and an allowable angle error is B degrees, then k is 100 multiplied by B divided by A, where k is set to be 5 herein.

In an embodiment of the invention, whether the vehicle has completed a gear shift is determined according to the completion degree of the shift hub angle. In this way, an accuracy of judging in-gear and out-of-gear is improved, a safety of executing the safety strategy is improved, and driving safety is further enhanced.

In some embodiments, the implementation of step S310 may include steps S311 to S315.

In Step S311, a first difference between a real-time target shift hub angle and a real-time actual shift hub angle is determined;

Here, real-time refers to a very small sampling frequency of 5 milliseconds (ms) in general. The first difference may be an average value of differences between the target and actual shift hub angles in a preset time period.

It should be understood that under normal conditions, there may also be a certain error between the target shift hub position and the actual shift hub position in a case that the vehicle maintains the current gear.

In Step S312, a second difference is determined between a target shift hub angle at a moment when a target gear changes and an actual shift hub angle at the moment when the target gear changes.

Here, the moment when the target gear changes refers to a moment when the vehicle performs a gear shifting.

In Step S313, the first difference is compared with the second difference to obtain a first ratio ;

In Step S314, a difference between 1 and the first ratio to obtain a third difference is calculated;

In Step S315, the third difference is converted into a percentage to obtain the completion degree .

It should be noted that the completion degree generally refers to a percentage. Here, the completion degree needs to be converted into a percentage.

In an embodiment of the invention, by optimizing a calculation method of the completion degree of the shift hub angle, the accuracy of judging in-gear and out-of-gear is improved, and an over-protection or under-protection is effectively avoided.

In some embodiments, an implementation of step S241 further includes step S410.

In Step S410, it is determined, in a case that the shift hub angle fed back by the vehicle during a self-learning process cannot represent an actual position of the shift hub, that the vehicle has not completed a gear shifting; or

it is determined, in a case that the abnormal event is that a position of the shift hub cannot be determined, that the vehicle has not completed the gear shifting.

It should be understood that if the position of the shift hub cannot be determined, the completion degree of the shift hub angle cannot be calculated. Generally, the completion degree is defaulted to 50%, and the vehicle is considered to be out of gear.

Optionally, situations where the position of the shift hub cannot be determined include: a gear shift failure occurs during a power-on or power-off self-learning process of the vehicle, a failure of the PWM signal, and an error in position of the shift hub.

In an embodiment of the invention, it is considered that the vehicle has not completed the gear shifting by default in a case that the completion degree of the shift hub angle cannot be calculated due to an undetermined position of the shift hub. In this way, a strategy for judging in-gear and out-of-gear is optimized, and thus the over-protection or under-protection is effectively avoided.

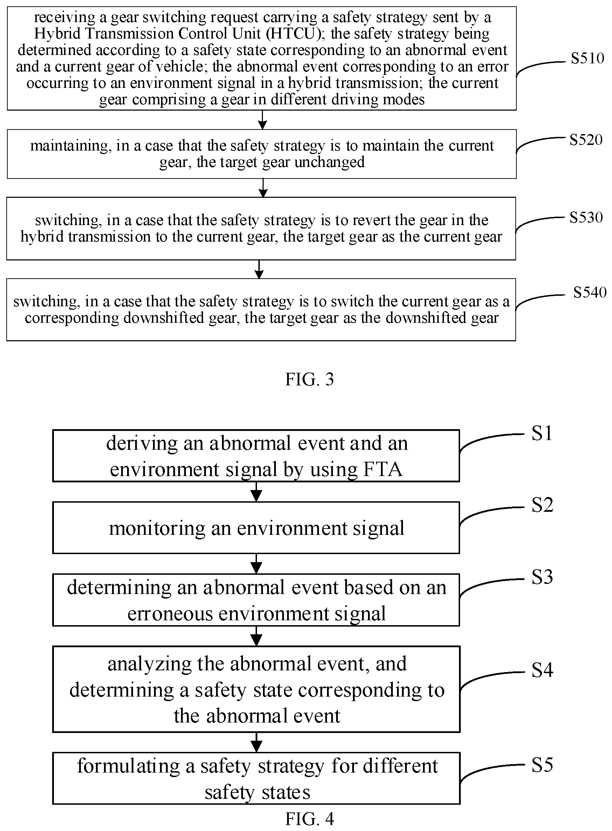

An embodiment of the invention provides a method for determining a safety strategy, applied to a vehicle electronic control unit (VECU), as shown in FIG. 3. The method includes steps S510 to S540.

In Step S510, a gear shifting request carrying a safety strategy sent by a Hybrid Transmission Control Unit (HTCU) is received. The safety strategy is determined according to a safety state corresponding to an abnormal event and a current gear of vehicle; the abnormal event corresponding to an error occurring to an environmental signal in a hybrid transmission. The current gear comprises a gear of different driving modes.

In an embodiment of the invention, the VECU receives the gear shifting request from the HTCU, and switches the target gear according to the gear shifting request.

In Step S520, in a case that the safety strategy is to maintain the current gear, the target gear is maintained unchanged.

In an embodiment of the invention, the HTCU requests to maintain the current gear, and the VECU needs to keep the target gear unchanged.

In Step S530, in a case that the safety strategy is to revert the gear of the hybrid transmission into the current gear, the target gear is shifted into the current gear.

In an embodiment of the invention, the HTCU requests to revert the gear of the hybrid transmission into the current gear, and the VECU switches the target gear into the current gear.

In Step S540, in a case that the safety strategy is to shift the current gear into a corresponding downshifted gear, the target gear is shifted into the downshifted gear.

In an embodiment of the invention, the HTCU requests to shift the current gear of the hybrid transmission into the corresponding downshifted gear, and the VECU switches the target gear into the downshifted gear.

In the embodiment of the invention, the HTCU determines a safety strategy for an abnormal event in a targeted manner, and the safety strategy is carried in the gear shifting request, so that the VECU accurately switches the target gear, and thus problems of over-protection and under-protection can be effectively avoided, a driving safety can be improved and a gear shifting mechanism can be protected.

In some embodiments, an implementation of step S530 includes steps S531 to S538.

In Step S531, in a case that a shifting from a gear of a series mode into a first gear of a direct drive mode fails, the target gear is shifted into the gear of the series mode. The target gear is the first gear of the direct drive mode;

Here, according to the structure of the hybrid multi-speed transmission, it can be seen that both the series mode and the first gear of the direct drive mode have a synchronizer S2L engaged. Therefore, the gear of the series mode is a gear adjacent to the first gear of the direct drive mode.

In Step S532, in a case that a shifting from a first gear of an Electric Continuously Variable Transmission (ECVT) mode into a first gear or a second gear of the direct drive mode fails, the target gear is shifted into the first gear of the ECVT mode. The target gear is the first gear or the second gear of the direct drive mode.

Here, both the first gear of the ECVT mode and the first gear or the second gear of the direct drive mode have a synchronizer S1R engaged. Therefore, the first gear of the ECVT mode is a gear adjacent to the first gear or the second gear of the direct drive mode.

In Step S533, in a case that an engagement of the second gear of the ECVT mode to the first gear or the second gear of the direct drive mode fails, the target gear is shifted into the second gear of the ECVT mode. The target gear is the first gear or the second gear of the direct drive mode.

Here, both the second gear of the ECVT mode and the first gear or the second gear of the direct drive mode have a synchronizer S1R engaged. Therefore, the second gear of the ECVT mode is a gear adjacent to the first gear or the second gear of the direct drive mode.

In Step S534, in a case that a shifting from a third gear of the ECVT mode into a third gear or a fourth gear of the direct drive mode fails, the target gear is shifted into the third gear of the ECVT mode. The target gear is the third gear or the fourth gear of the direct drive mode.

Here, both the third gear of the ECVT mode and the third gear or the fourth gear of the direct drive mode have a synchronizer S1L engaged. Therefore, the third gear of the ECVT mode is a gear adjacent to the third gear or the fourth gear of the direct drive mode.

In Step S535, in a case that a shifting from a fourth gear of the ECVT mode into the third gear or the fourth gear of the direct drive mode fails, the target gear is shifted into the fourth gear of the ECVT mode. The target gear is the third gear or the fourth gear of the direct drive mode.

Here, both the fourth gear of the ECVT mode and the third gear or the fourth gear of the direct drive mode have a synchronizer S1L engaged. Therefore, the fourth gear of the ECVT mode is a gear adjacent to the third gear or the fourth gear of the direct drive mode.

In Step S536, in a case that a shifting from a first gear of an Electric Vehicle (EV) mode into a second gear of the ECVT mode fails, the target gear is shifted into the third gear of the ECVT mode, the target gear being the third gear of the ECVT mode; and in a case that the HTCU fails to shift the gear into the third gear of the ECVT mode, the third gear of the ECVT mode is shifted into the first gear of the EV mode.

Here, in the EV mode, there is no a synchronizer engaged. In a case that a shifting from the first gear of the EV mode into the second gear of the ECVT mode fails, the target gear needs to be shifted to the nearest lower gear (the third gear of the ECVT mode) first, and then shifted, in a case that the shifting fails, into the second nearest lower gear (the first gear of the EV mode).

In Step S537, in a case that a shifting from the first gear of the EV mode into the third gear of the ECVT mode fails, the target gear is shifted into the second gear of the ECVT mode; and in a case that the HTCU fails to shift the gear into the second gear of the ECVT mode, the second gear of the ECVT mode is shifted into the first gear of the EV mode.

Here, the second gear of the ECVT mode is a gear adjacent to the third gear of the ECVT mode; the first gear of the EV mode is a gear adjacent to the second gear of the ECVT mode.

In Step S538, in a case that a shifting from the second gear of the EV mode into the fourth gear of the direct drive mode fails, the target gear is shifted into the second gear of the EV mode. The target gear is the fourth gear of the direct drive mode.

Here, the second gear of the EV mode is a gear adjacent to the fourth gear of the direct drive mode.

In an embodiment of the invention, an adjacent gear (i.e., the current gear) corresponding to a target gear is determined according to that the gear shifting is sticked in different driving modes, and the target gear is reverted into the current gear. In this way, the problems of over-protection or under-protection are effectively improved.

In some embodiments, an implementation of step S540 may include steps S541 to S545.

In Step S541, the target gear is kept unchanged in a case that the current gear is in an ECVT mode or a series mode.

Here, the ECVT mode and the series mode are safe gears, and thus the target gear can be kept unchanged.

In Step S542, in a case that the current gear is a first gear of the direct drive mode, the target gear is shifted into the first gear of the ECVT mode. The downshifted gear is the first gear of the ECVT mode.

Here, the first gear of the ECVT mode is a downshifted gear adjacent to the first gear of the direct drive mode.

In Step S543, in a case that the current gear is a second gear of the direct drive mode or the first gear of the EV mode, the target gear is shifted into the second gear of the ECVT mode. The downshifted gear is the second gear of the ECVT mode.

Here, the second gear of the ECVT mode is a downshifted gear adjacent to the second gear of the direct drive mode or the first gear of the EV mode.

In Step S544, in a case that the current gear is a third gear of the direct drive mode, the target gear is shifted into the third gear of the ECVT mode. The downshifted gear is the third gear of the ECVT mode.

Here, the third gear of the ECVT mode is a downshifted gear adjacent to the third gear of the direct drive mode.

In Step S545, in a case that the current gear is a fourth gear of the direct drive mode or a second gear of the EV mode, the target gear is shifted into the fourth gear of the ECVT mode. The downshifted gear is the fourth gear of the ECVT mode.

Here, the fourth gear of the ECVT mode is a downshifted gear adjacent to the fourth gear of the direct drive mode or the second gear of the EV mode.

In an embodiment of the invention, a downshifted gear corresponding to a current gear is determined according to different driving modes of the current gear, and a target gear is shifted into the downshifted gear, so that the vehicle shifts into a gear that is safe or does not affect driving in advance, and thus an over-protection or under-protection can be avoided, thereby protecting the gear shifting mechanism and improving driving safety.

The method for determining a safety strategy provided by the embodiments of the invention will be described in detail below in conjunction with specific application scenarios.

The embodiment of the invention relates to another method for determining a safety strategy. Abnormal events are derived based on FTA. The abnormal events are determined by monitoring an environmental signal of a shift motor, and a safety strategy is determined for the abnormal events in a targeted manner. Thus, a monitoring of a gear shift failure and protection in various driving modes can be achieved, a shift mechanism can be protected to the greatest extent, maintenance costs can be reduced, and driving safety can be improved.

The another method for determining the safety strategy will be described in detail below. As shown in FIG. 4, the method includes steps S1 to S5.

S1: an abnormal event and an environmental signal are derived by using FTA.

It should be understood that the abnormal event in the embodiment of the invention may be a bottom event in an application scenario.

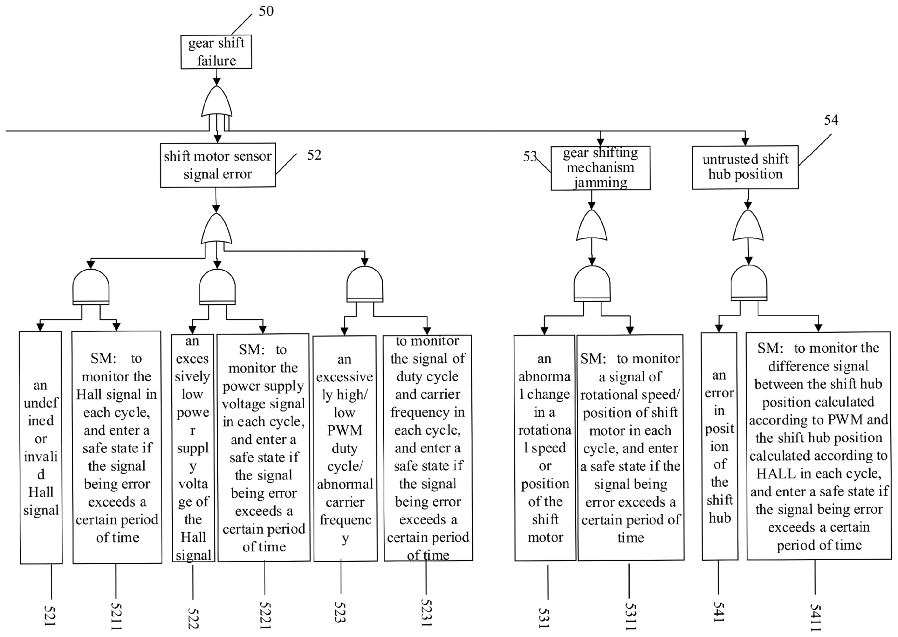

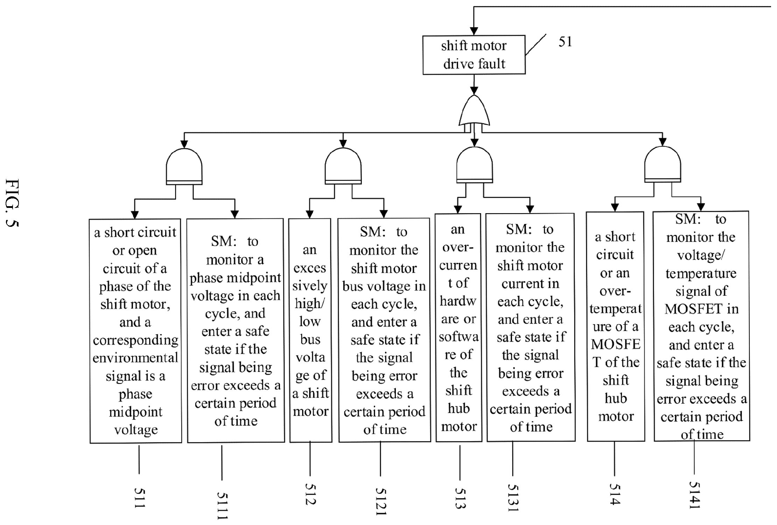

An embodiment of the invention provides an FTA structure for a gear shift failure. As shown in FIG. 5, causes of the gear shift failure 50 analyzed by the FTA include, but are not limited to, a shift motor drive fault 51, a shift motor sensor signal error 52, a gear shifting mechanism sticking 53, and an untrusted shift hub position 54.

As shown in FIG. 5, the shift motor drive fault 51 corresponds to 4 abnormal events, in which abnormal event-1 511 is a short circuit or open circuit of a phase of the shift motor, and a corresponding environmental signal is a phase midpoint voltage; an abnormal event-2 512 is an excessively high/low bus voltage of a shift motor, and a corresponding environmental signal is a shift motor bus voltage; an abnormal event-3 513 is an over-current of hardware or software of the shift hub motor, and a corresponding environmental signal is a shift motor current; an abnormal event-4 514 is a short circuit or an over-temperature of a MOSFET of the shift hub motor, and a corresponding environmental signal is a voltage/temperature signal of MOSFET. The shift motor sensor signal error 52 corresponds to two abnormal events, in which an abnormal event-5 521 is an undefined or invalid Hall signal, and a corresponding environmental signal is a Hall signal; an abnormal event-6 522 is an excessively low power supply voltage of the Hall signal, and a corresponding environmental signal is a power supply voltage signal; an abnormal event-7 523 is an excessively high/low PWM duty cycle/abnormal carrier frequency, and a corresponding environmental signal is a signal of duty cycle and carrier frequency. The gear shifting mechanism sticking 53 corresponds to one abnormal event, in which an abnormal event-8 531 is an abnormal change in a rotational speed or position of the shift motor, and a corresponding environmental signal is a motor rotational speed or positional signal. The untrusted shift hub position 54 corresponds to one abnormal event, in which an abnormal event-9 541 is an error in position of the shift hub, and a corresponding environmental signal is a difference signal between a shift hub position calculated according to PWM and a shift hub position calculated according to Hall.

S2: an environmental signal is monitored.

S3: an abnormal event is determined based on an erroneous environmental signal.

In an embodiment of the invention, the monitoring different environmental signals represents different Safety Mechanisms (SM). As shown in FIG. 5, a safety mechanism 5111 corresponding to the abnormal event-1 511 is to monitor a phase midpoint voltage in each cycle, and enter a safe state if the signal being error exceeds a certain period of time; a safety mechanism 5121 corresponding to the abnormal event-2 512 is to monitor the shift motor bus voltage in each cycle, and enter a safe state if the signal being error exceeds a certain period of time; a safety mechanism 5131 corresponding to abnormal event-3 513 is to monitor the shift motor current in each cycle, and enter a safe state if the signal being error exceeds a certain period of time; a safety mechanism 5141 corresponding to abnormal event-4 514 is to monitor the voltage/temperature signal of MOSFET in each cycle, and enter a safe state if the signal being error exceeds a certain period of time; a safety mechanism 5211 corresponding to abnormal event-5 521 is to monitor the Hall signal in each cycle, and enter a safe state if the signal being error exceeds a certain period of time; a safety mechanism 5221 corresponding to abnormal event-6 522 is to monitor the power supply voltage signal in each cycle, and enter a safe state if the signal being error exceeds a certain period of time; a safety mechanism 5231 corresponding to abnormal event-7 523 is to monitor the signal of duty cycle and carrier frequency in each cycle, and enter a safe state if the signal being error exceeds a certain period of time; a safety mechanism 5311 corresponding to abnormal event eight 531 is to monitor a signal of rotational speed/position of shift motor in each cycle, and enter a safe state if the signal being error exceeds a certain period of time; a safety mechanism 5411 corresponding to abnormal event-9 541 is to monitor the difference signal between the shift hub position calculated according to PWM and the shift hub position calculated according to HALL in each cycle, and enter a safe state if the signal being error exceeds a certain period of time.

By monitoring each environmental signal, when an error occurs in an environmental signal, it is indicated that the abnormal event corresponding to the environmental signal has occurred.

S4: the abnormal event is analyzed, and a safety state corresponding to the abnormal event is determined.

In an embodiment of the invention, impacts of abnormal events are analyzed and classified, and a safety state is formulated for different categories. Here, in a case that there are a plurality of abnormal events, the abnormal events may be classified first to reduce a processing burden on a system.

It should be understood that an over-temperature in abnormal event-4 can be divided into a warning event-4 (1), i.e., an over-temperature warning of the shift motor drive; and a severe event-4 (2), i.e., an over-temperature shutdown of the shift motor drive.

Exemplarily, through analysis, abnormal event-1, abnormal event-2, abnormal event-3 and abnormal event-4 (2) can be classified into a first category, and a safety state corresponding to the first category is that a drive chip is protected, and a tube needs to be turned off, and thus a gear shifting cannot be performed. The abnormal event-4 (1) is classified into a second category, and a safety state corresponding to the second category is that the drive chip is protected, an over-temperature warning is issued, and a gear shifting is allowed. The abnormal event-5, abnormal event-6 and abnormal event-7 are classified into a third category, and a safety state corresponding to the third category is that the shift motor cannot work or works incorrectly due to a signal error, a tube needs to be turned off, and a gear shift cannot be performed. The abnormal event-8 is classified into a fourth category, and a safety state corresponding to the fourth category is that the shift hub cannot move normally or the shift motor cannot work normally due to mechanical sticking, resulting in a limited gear shifting. The abnormal event-9 is classified into a fifth category, and a safety state corresponding to the fifth category is that the shift motor works incorrectly due to untrusted signal, resulting in an unknown position of the shift hub , and a tube needs to be turned off and a gear shifting cannot be performed.

S5: a safety strategy is formulated for different safety states.

According to an analysis and summary in S4, the first category, the third category and the fifth category all require a turn-off of tube, and thus a gear shifting cannot be performed. Therefore, the safety state is: the shift motor is turned off and the shift motor stops working. After the shift motor is turned off, the determined safety strategy is: (1) if a gear shifting is completed and a current gear is the series mode or the ECVT mode, the HTCU requests to maintain the current gear, the VECU keeps the target gear at the current gear, and the HTCU does not shift gears; (2) if gear shifting is completed and the current gear is the direct drive/EV mode, the HTCU requests to maintain the current gear, the VECU keeps the target gear at the current gear, and the HTCU does not shift gears; when in a gear of the direct drive mode, if the engine stalls due to low engine speed during driving or the driver actively stops the vehicle, the drive motor is allowed to directly drive the vehicle to stop at a safe point; (3) if a gear shifting is in progress, the HTCU requests to cut off power, the VECU keeps the target gear at the current gear, and the VECU limits an output shaft torque to be 0.

Optionally, an implementation of judging whether the vehicle has completed the gear shifting can refer to the above steps S310 to S330 and steps S311 to S315, which will not be repeated here.

According to an analysis and summary in S4, the fourth category does not require a condition in which a tube needs to be turned off, a gear shifting is impossible or a shifting in a certain direction is impossible. Optionally, the safety strategy refined according to different gears is: (1) in a case that a shifting from a gear of the series mode into the first gear of the direct drive mode fails, the HTCU requests to revert to an adjacent series mode gear, the VECU switches the target gear as the series mode, and the HTCU shifts a gear of the drive mode into a gear of the series mode and maintains a current series mode gear; (2) in a case that a shifting from the first gear of the ECVT mode into the first gear or the second gear of the direct drive mode fails, the HTCU requests to revert to an adjacent ECVT mode gear, the VECU switches the target gear into the first gear of the ECVT mode, and the HTCU shifts a gear into the first gear of the ECVT mode and maintains the current ECVT 1-1 gear; (3) in a case that a shifting from the second gear of the ECVT mode into the first gear or the second gear of the direct drive mode fails, the HTCU requests to revert to an adjacent ECVT mode gear, the VECU switches the target gear into the second gear of the ECVT mode, and the HTCU shifts a gear into the second gear of the ECVT mode and maintains the current second gear of the ECVT mode; (4) in a case that a shifting from the third gear of the ECVT mode into the third gear or the fourth gear of the direct drive mode fails, the HTCU requests to revert into the adjacent ECVT mode gear, the VECU switches the target gear into the third gear of the ECVT mode, and the HTCU shifts a gear into the third gear of the ECVT mode and maintains the current third gear of the ECVT mode; (5) in a case that a shifting from the fourth gear of the ECVT mode into the third gear or the fourth gear of the direct drive mode fails, the HTCU requests to revert to the adjacent ECVT mode gear, the VECU switches the target gear into the fourth gear of the ECVT mode, and the HTCU shifts a gear into the fourth gear of the ECVT mode and maintains the current fourth gear of the ECVT mode; (6) in a case that an engagement from the first gear of the EV mode into the second gear of the ECVT mode fails, the HTCU requests to revert to the adjacent ECVT mode gear, the VECU switches the target gear into the third gear of the ECVT mode, and the HTCU shifts a gear into the third gear of the ECVT mode and maintains the current third gear of the ECVT mode. If a reverting to the third gear of the ECVT mode fails, the VECU switches the target gear into the first gear of the EV mode, and the HTCU shifts a gear into the first gear of the EV mode and maintains the current first gear of the EV mode; (7) in a case that a shifting from the first gear of the EV mode into the third gear of the ECVT mode fails, the HTCU requests to revert to the adjacent ECVT mode, the VECU switches the target gear into the second gear of the ECVT mode, and the HTCU shifts a gear into the second gear of the ECVT mode and maintains the current second gear of the ECVT mode. If a reverting to the second gear of the ECVT mode fails, the VECU switches the target gear into the first gear of the EV mode, and the HTCU shifts into the first gear of the EV mode and maintains the current first gear of the EV mode; (8) in a case that a shifting from the second gear of the EV mode into the fourth gear of the direct drive mode fails, the HTCU requests to revert to the EV mode, the VECU switches the target gear into the second gear of the EV mode, and the HTCU shifts a gear into the second gear of the EV mode and maintains the current second gear of the EV mode.

According to an analysis and summary in S4, the second category does not require a tube needs to be turned off, and a gear shifting can be performed, and a gear that is safe and does not affect driving needs to be entered in advance. Optionally, the safety strategy refined according to different current gears is: (1) when the current gear is the ECVT/series mode gear, the HTCU requests to maintain the current gear, the VECU keeps the target gear at the current gear, and the HTCU does not shift gears; (2) when the current gear is the first gear of the direct drive mode, the HTCU requests to switch to the adjacent ECVT mode, the VECU switches the target gear into the first gear of the ECVT mode, and the HTCU shifts a gear into the first gear of the ECVT mode and maintains the current first gear of the ECVT mode; (3) when the current gear is the second gear of the direct drive mode or the first gear of the EV mode, the HTCU requests to switch to the adjacent ECVT mode, the VECU switches the target gear into the second gear of the ECVT mode, and the HTCU shifts a gear into the second gear of the ECVT mode and maintains the current second gear of the ECVT mode; (4) if the current gear is the third gear of the direct drive mode, the HTCU requests to switch to the adjacent ECVT mode, the VECU switches the target gear to the third gear of the ECVT mode, and the HTCU shifts a gear into the third gear of the ECVT mode and maintains the current third gear of the ECVT mode; (5) if the current gear is the fourth gear of the direct drive mode or the second gear of the EV mode, the HTCU requests to switch to the adjacent ECVT mode gear, the VECU switches the target gear into the fourth gear of the ECVT mode, and the HTCU shifts a gear into the fourth gear of the ECVT mode and maintains the current fourth gear of the ECVT mode.

The method for determining a safety strategy provided by the embodiments of the invention has advantages including: from a perspective of hardware protection and functional safety, a method that meets the requirements of monitoring for gear shift failure and downshift process in different driving modes such as direct drive/parallel, ECVT/EV and series modes is provided; a functional safety fault tree analysis method is adopted to derive monitored bottom events and safety mechanisms thereof, and the derived events and SM are classified to refine corresponding safety mechanisms, to be capable of effectively avoiding over-protection or under-protection; the strategy for judging in-gear and out-of-gear status is optimized, to be capable of effectively avoiding over-protection or under-protection.

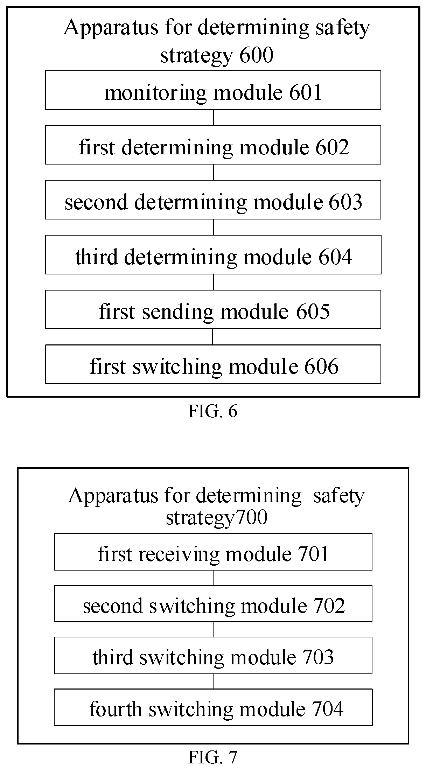

An embodiment of the invention provides an apparatus for determining a safety strategy. As shown in FIG. 6, the apparatus 600 for determining a safety strategy includes:
a monitoring module 601, configured for monitoring an environmental signal in a hybrid transmission; the environmental signal comprising at least one of: a voltage signal, a current signal, a temperature signal, a sensor signal, and a positional signal;
a first determining module 602, configured for determining, in a case that an error occurs in the environmental signal, an abnormal event corresponding to the environmental signal.
a second determining module 603, configured for analyzing the abnormal event, and determining a safety state corresponding to the abnormal event.
a third determining module 604, configured for determining a safety strategy corresponding to the abnormal event on the basis of the safety state and a current gear of vehicle; the current gear comprising a gear of different driving modes; the safety strategy comprising at least one of: maintaining the current gear, reverting a gear of the hybrid transmission into the current gear, and shifting the current gear into a corresponding downshiftedgear;
a first sending module 605, configured for sending a gear shifting request carrying the safety strategy to a Vehicle Electronic Control Unit (VECU), the gear shifting request being used to request the VECU to switch a target gear on the basis of the safety strategy;
a first shifting module 606, configured for shifting the gear of the hybrid transmission into the target gear.

In some embodiments, the third determining module 604 includes: a first determining sub-module, configured for determining, in a case that the safety state is that a shift motor is turned off, to maintain the current gear; a second determining sub-module, configured for determining, in a case that the safety state is that the shift motor is not turned off and a gear shifting is sticked, to revert the gear of the hybrid transmission back into the current gear; a third determining sub-module, configured for determining, in a case that the safety state is that the shift motor is not turned off and a gear shifting is available, to shift the current gear into a corresponding downshifted gear.

In some embodiments, the first determining sub-module includes: a first maintaining unit, configured for maintaining, in a case that the vehicle has completed a gear shifting, the current gear; a second maintaining unit, configured for requesting, in a case that the vehicle has not completed a gear shifting, to cut off a power and maintaining the current gear.

In some embodiments, the first determining sub-module further includes: a first determining unit, configured for determining a completion degree of a shift hub angle during a gear shifting process; a second determining unit, configured for determining, in a case that the completion degree meets a preset threshold, that the vehicle has completed a gear shifting; a third determining unit, configured for determining, in a case that the completion degree does not meet the preset threshold, that the vehicle has not completed a gear shifting.

In some embodiments, the first determining unit further includes: a first determining sub-unit, configured for determining a first difference between a real-time target shift hub angle and a real-time actual shift hub angle; a second determining sub-unit, configured for determining a second difference between a target shift hub angle at a moment when a target gear changes and an actual shift hub angle at the moment when the target gear changes; a first calculation sub-unit, configured for comparing the first difference with the second difference to obtain a first ratio; a second calculation sub-unit, configured for calculating a difference between 1 and the first ratio to obtain a third difference; a third calculation sub-unit, configured for converting the third difference into a percentage to obtain the completion degree.

In some embodiments, the third determining unit further includes: a third determining sub-unit, configured for determining, in a case that the shift hub angle fed back by the vehicle during a self-learning process cannot represent an actual position of the shift hub, that the vehicle has not completed a gear shifting; or or, determining, in a case that the abnormal event is that a position of the shift hub cannot be determined, that the vehicle has not completed the gear shifting.

In some embodiments, the first determining module 602 further includes: a derivation module, configured to derive the abnormal event based on a Fault Tree Analysis (FTA); and a fourth determining sub-module, configured to determine the abnormal event corresponding to the environmental signal based on a mapping relationship; the mapping relationship being used to represent a correspondence relationship between the abnormal event and the environmental signal.

An embodiment of the invention provides an apparatus for determining a safety strategy. As shown in FIG. 7, the apparatus 700 for determining a safety strategy includes:
a first receiving module 701, configured for receiving a gear shifting request carrying a safety strategy sent by a Hybrid Transmission Control Unit (HTCU); the safety strategy being determined according to a safety state corresponding to an abnormal event and a current gear of vehicle; the abnormal event corresponding to an error occurring to an environmental signal in a hybrid transmission; the current gear comprising a gear of different driving modes;
a second shifting module 702, configured for maintaining, in a case that the safety strategy is to maintain the current gear, the target gear unchanged;
a third shifting module 703, further configured for shifting, in a case that the safety strategy is to revert the gear of the hybrid transmission into the current gear, the target gear into the current gear;
a fourth shifting module 704, further configured for shifting, in a case that the safety strategy is to shift the current gear into a corresponding downshifted gear, the target gear into the downshifted gear.

In some embodiments, the third shifting module 703 includes: a first shifting sub-module, configured for shifting, in a case that an engagement from a gear of a series mode into a first gear of a direct drive mode fails, the target gear into the gear of the series mode; the target gear being the first gear of the direct drive mode; shifting, in a case that an engagement from a first gear of an Electric Continuously Variable Transmission (ECVT) mode into a first gear or a second gear of the direct drive mode fails, the target gear into the first gear of the ECVT mode; the target gear being the first gear or the second gear of the direct drive mode; shifting, in a case that an engagement of the second gear of the ECVT mode to the first gear or the second gear of the direct drive mode fails, the target gear into the second gear of the ECVT mode; the target gear being the first gear or the second gear of the direct drive mode; shifting, in a case that an engagement from a third gear of the ECVT mode into a third gear or a fourth gear of the direct drive mode fails, the target gear into the third gear of the ECVT mode; the target gear being the third gear or the fourth gear of the direct drive mode. shifting, in a case that an engagement from a fourth gear of the ECVT mode into the third gear or the fourth gear of the direct drive mode fails, the target gear into the fourth gear of the ECVT mode; the target gear being the third gear or the fourth gear of the direct drive mode; shifting, in a case that an engagement from a first gear of an Electric Vehicle (EV) mode into a second gear of the ECVT mode fails, the target gear into the third gear of the ECVT mode, the target gear being the third gear of the ECVT mode; and shifting, in a case that the HTCU fails to shift the gear into the third gear of the ECVT mode, the third gear of the ECVT mode into the first gear of the EV mode. shifting, in a case that an engagement from the first gear of the EV mode into the third gear of the ECVT mode fails, the target gear into the second gear of the ECVT mode; and shifting, in a case that the HTCU fails to shift the gear into the second gear of the ECVT mode, the second gear of the ECVT mode into the first gear of the EV mode; shifting, in a case that an engagement from the second gear of the EV mode into a fourth gear of the direct drive mode fails, the target gear into the second gear of the EV mode; the target gear being the fourth gear of the direct drive mode.

In some embodiments, the fourth shifting module 704 includes: a second shifting sub-module, configured for keeping the target gear unchanged in a case that the current gear is in an ECVT mode or a series mode; shifting, in a case that the current gear is the first gear of the direct drive mode, the target gear into the first gear of the ECVT mode, the downshifted gear being the first gear of the ECVT mode; shifting, in a case that the current gear is the second gear of the direct drive mode or the first gear of the EV mode, the target gear into the second gear of the ECVT mode, the downshifted gear being the second gear of the ECVT mode; shifting, in a case that the current gear is a third gear of the direct drive mode, the target gear into the third gear of the ECVT mode, the downshifted gear being the third gear of the ECVT mode; shifting, in a case that the current gear is a fourth gear of the direct drive mode or the second gear of the EV mode, the target gear into the fourth gear of the ECVT mode, the downshifted gear being the fourth gear of the ECVT mode.

The above description of the embodiments of the apparatus for determining a safety strategy is similar to the description of the embodiments of the method for determining a safety strategy, and has similar beneficial effects as the method embodiments. In some embodiments, the functions or modules included in the apparatus for determining a safety strategy provided by the embodiments of the invention can be used to perform the methods described in the embodiments of the method for determining a safety strategy. For technical details not disclosed in the apparatus embodiments of the invention, please refer to the description of the method embodiments for determining a safety strategy of the invention.

It should be noted that, in the embodiments of the invention, if the above method for determining a safety strategy is implemented in the form of a software functional module and sold or used as an independent product, it may also be stored in a computer-readable storage medium. Based on such an understanding, the technical solutions of the embodiments of the invention essentially or the part contributing to the related art, can be embodied in the form of a software product. The software product is stored in a storage medium and includes several instructions for causing a vehicle to perform all or part of the method for determining a safety strategy described in various embodiments of the invention. The aforementioned storage medium includes: a U disk, a mobile hard disk, a Read Only Memory (ROM), a magnetic disk, or an optical disk, and other media that can store program codes. Thus, the embodiments of the invention are not limited to any specific combination of hardware, software, or firmware, or any combination thereof.

An embodiment of the invention provides a device for determining a safety strategy, comprising a memory and a controller. The memory stores a computer program executable on the controller. The controller, when executing the program, implements some or all of the steps in the method for determining a safety strategy described above.

An embodiment of the invention provides a computer-readable storage medium, on which a computer program is stored. The computer program, when executed by a controller, implements some or all of the steps in the method for determining a safety strategy described above. The computer-readable storage medium may be transitory or non-transitory.

An embodiment of the invention provides a computer program, comprising computer-readable code. in a case that the computer-readable code is executed in a vehicle, a controller in the vehicle executes some or all of the steps in the method for determining a safety strategy described above.

An embodiment of the invention provides a computer program product. The computer program product comprises a non-transitory computer-readable storage medium storing a computer program. When the computer program is read and executed by a computer, some or all of the steps in the method for determining a safety strategy described above are implemented. The computer program product may be specifically implemented by hardware, software, or a combination thereof. In some embodiments, the computer program product is specifically embodied as a computer storage medium, and in other embodiments, the computer program product is specifically embodied as a software product, such as a Software Development Kit (SDK), etc.

It should be pointed out here that the description of the above embodiments focuses on the differences between the various embodiments, and the same or similar parts between the embodiments may be referred to each other. The description of the embodiments of the device, storage medium, computer program and computer program product above is similar to the description of the embodiments of the method above, and has similar beneficial effects to the method embodiments. For technical details not disclosed in the embodiments of the device, storage medium, computer program and computer program product of the invention, please refer to the description of the method embodiments of the safety strategy determining method of the invention for understanding.

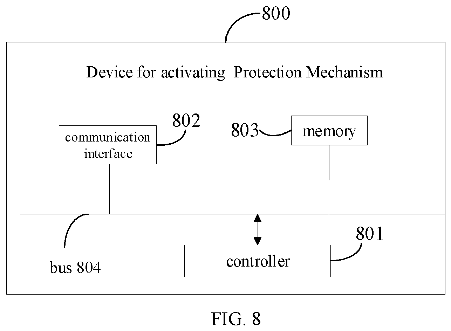

It should be noted that an embodiment of the invention provides a vehicle. As shown in FIG. 8, a hardware entity of a vehicle 800 includes: a controller 801, a communication interface 802, and a memory 803. The controller 801 generally controls the overall operation of the vehicle 800. The communication interface 802 can enable the vehicle for determining a safety strategy to communicate with other terminals or servers through a network. The memory 803 is configured to store instructions and applications executable by the controller 801, and can also cache data (e.g., image data, audio data, voice communication data, and video communication data) to be processed or already processed by the controller 801 and various modules in the vehicle 800, which can be implemented by a FLASH memory or a Random Access Memory (RAM). Data transmission can be performed between the controller 801, the communication interface 802, and the memory 803 through a bus 804.

It should be understood that reference throughout the specification to "one embodiment" or "an embodiment" means that a particular feature, structure, or characteristic related to the embodiment is included in at least one embodiment of the invention. Thus, the appearances of the phrases "in one embodiment" or "in an embodiment" in various places throughout the specification are not necessarily all referring to the same embodiment. Furthermore, the particular features, structures, or characteristics may be combined in any suitable manner in one or more embodiments. It should be understood that, in various embodiments of the invention, the size of the sequence numbers of the above steps/processes does not mean the execution order, and the execution order of each step/process should be determined by its function and internal logic, and should not constitute any limitation on the implementation process of the embodiments of the invention. The serial numbers of the embodiments of the invention are only for description, and do not represent the advantages and disadvantages of the embodiments.

It should be noted that, in this document, the terms "comprise", "include" or any other variation thereof are intended to cover a non-exclusive inclusion, so that a process, method, article, or apparatus that includes a list of elements includes not only those elements, but also other elements not explicitly listed, or elements inherent to such a process, method, article, or apparatus. Without more restrictions, an element defined by the phrase "including a ..." does not exclude the presence of another identical element in the process, method, article, or apparatus that includes the element.

In the several embodiments provided in the invention, it should be understood that the disclosed device and method may be implemented in other ways. The device embodiments described above are only illustrative. For example, the division of the units is only a logical function division, and there may be other division methods in actual implementation, such as: a plurality of units or components may be combined, or may be integrated into another system, or some features may be ignored, or not implemented. In addition, the coupling, direct coupling, or communication connection between the components shown or discussed may be indirect coupling or communication connection through some interfaces, devices, or units, and may be electrical, mechanical, or in other forms.

The units described as separate components may or may not be physically separated, and the components shown as units may or may not be physical units; they may be located in one place, or distributed on a plurality of network units; and part or all of the units may be selected according to actual needs to achieve the purpose of the solution of this embodiment.

In addition, each functional unit in each embodiment of the invention may be integrated into one processing unit, or each unit may be separately used as one unit, or two or more units may be integrated into one unit; the above integrated unit may be implemented in the form of hardware, or in the form of hardware plus software functional units.

Those of ordinary skill in the art will understand that all or part of the steps of the above method embodiments may be implemented by a program instructing relevant hardware. The aforementioned program may be stored in a computer-readable storage medium, and when the program is executed, the steps including the above method embodiments are executed; and the aforementioned storage medium includes: a mobile storage device, a Read Only Memory (ROM), a magnetic disk, an optical disk, and other media that can store program codes.

Alternatively, if the above integrated unit of the invention is implemented in the form of a software function module and sold or used as an independent product, it may also be stored in a computer-readable storage medium. Based on such an understanding, the technical solutions of the invention essentially or the part contributing to the related art may be embodied in the form of a software product, which is stored in a storage medium and includes several instructions to enable a vehicle to execute all or part of the methods described in the various embodiments of the invention. The aforementioned storage medium includes: a mobile storage device, a ROM, a magnetic disk, an optical disk, and other media that can store program codes.

The above are only specific implementations of the invention, but the protection scope of the invention is not limited thereto. Any person skilled in the art can easily think of changes or substitutions within the technical scope disclosed in the invention, and all of them shall be covered within the protection scope of the invention.

## Claims

1. A method for determining a safety strategy, applied to a Hybrid Transmission Control Unit (HTCU), the method comprising:
monitoring an environmental signal in a hybrid transmission, the environmental signal comprising at least one of: a voltage signal, a current signal, a temperature signal, a sensor signal, and a positional signal;
determining, in a case that an error occurs in the environmental signal, an abnormal event corresponding to the environmental signal;
analyzing the abnormal event, and determining a safety state corresponding to the abnormal event;
determining a safety strategy corresponding to the abnormal event on the basis of the safety state and a current gear of vehicle, the current gear comprising one gear of different driving modes, wherein the safety strategy comprises at least one of: maintaining the current gear, reverting a gear of the hybrid transmission into the current gear, and shifting the current gear into a corresponding downshifted gear;
sending a gear shifting request carrying the safety strategy to a Vehicle Electronic Control Unit (VECU), the gear shifting request being used to request the VECU to switch a target gear on the basis of the safety strategy; and
shifting the gear of the hybrid transmission into the target gear.

2. The method according to claim 1, wherein the determining the safety strategy corresponding to the abnormal event on the basis of the safety state and the current gear of vehicle, comprises;
determining, in a case that the safety state is that a shift motor is turned off, to maintain the current gear;
determining, in a case that the safety state is that the shift motor is not turned off and a gear shifting is sticked, to revert the gear of the hybrid transmission back into the current gear; and
determining, in a case that the safety state is that the shift motor is not turned off and a gear shifting is available, to shift the current gear into a corresponding downshifted gear;
wherein the determining to maintain the current gear comprises:
maintaining, in a case that the vehicle has completed a gear shifting, the current gear;
requesting, in a case that the vehicle has not completed a gear shifting, to cut off a power and maintaining the current gear.

3. The method according to claim 2, wherein the method further comprises:
determining a completion degree of a shift hub angle during a gear shifting process.
determining, in a case that the completion degree meets a preset threshold, that the vehicle has completed the gear shifting;
determining, in a case that the completion degree does not meet the preset threshold, that the vehicle has not completed a gear shifting.

4. The method according to claim 3, wherein the determining the completion degree of the shift hub angle during a gear shifting process, comprises:
determining a first difference between a real-time target shift hub angle and a real-time actual shift hub angle;
determining a second difference between a target shift hub angle at a moment when a target gear changes and an actual shift hub angle at the moment when the target gear changes;
comparing the first difference with the second difference to obtain a first ratio;
calculating a difference between 1 and the first ratio to obtain a third difference; and
converting the third difference into a percentage to obtain the completion degree.

5. The method according to claim 3, wherein the method further comprises:
determining, in a case that the shift hub angle fed back by the vehicle during a self-learning process cannot represent an actual position of the shift hub, that the vehicle has not completed a gear shifting; or
determining, in a case that the abnormal event is that a position of the shift hub cannot be determined, that the vehicle has not completed the gear shifting.

6. A method for determining a safety strategy, applied to a Vehicle Electronic Control Unit (VECU), the method comprising:
receiving a gear shifting request carrying a safety strategy sent by a Hybrid Transmission Control Unit (HTCU), the safety strategy being determined according to a safety state corresponding to an abnormal event and a current gear of vehicle, wherein the abnormal event corresponds to an error occurring to an environmental signal in a hybrid transmission, the current gear comprising one gear of different driving modes;
maintaining, in a case that the safety strategy is to maintain the current gear, a target gear unchanged;
shifting, in a case that the safety strategy is to revert a gear of the hybrid transmission into the current gear, the target gear into the current gear;
shifting, in a case that the safety strategy is to shift the current gear into a corresponding downshifted gear, the target gear into the downshifted gear.

7. The method according to claim 6, wherein the shifting the target gear into the current gear, comprises:
shifting, in a case that an engagement from a gear of a series mode into a first gear of a direct drive mode fails, the target gear into the gear of the series mode, the target gear being the first gear of the direct drive mode;
shifting, in a case that an engagement from a first gear of an Electric Continuously Variable Transmission (ECVT) mode into a first gear or a second gear of the direct drive mode fails, the target gear into the first gear of the ECVT mode, the target gear being the first gear or the second gear of the direct drive mode;
shifting, in a case that an engagement of the second gear of the ECVT mode to the first gear or the second gear of the direct drive mode fails, the target gear into the second gear of the ECVT mode, the target gear being the first gear or the second gear of the direct drive mode;
shifting, in a case that an engagement from a third gear of the ECVT mode into a third gear or a fourth gear of the direct drive mode fails, the target gear into the third gear of the ECVT mode, the target gear being the third gear or the fourth gear of the direct drive mode;
shifting, in a case that an engagement from a fourth gear of the ECVT mode into the third gear or the fourth gear of the direct drive mode fails, the target gear into the fourth gear of the ECVT mode, the target gear being the third gear or the fourth gear of the direct drive mode;
shifting, in a case that an engagement from a first gear of an Electric Vehicle (EV) mode into a second gear of the ECVT mode fails, the target gear into the third gear of the ECVT mode, the target gear being the third gear of the ECVT mode; and shifting, in a case that the HTCU fails to shift the gear into the third gear of the ECVT mode, the third gear of the ECVT mode into the first gear of the EV mode;
shifting, in a case that an engagement from the first gear of the EV mode into the third gear of the ECVT mode fails, the target gear into the second gear of the ECVT mode; and shifting, in a case that the HTCU fails to shift the gear into the second gear of the ECVT mode, the second gear of the ECVT mode into the first gear of the EV mode;
shifting, in a case that a shifting from the second gear of the EV mode into a fourth gear of the direct drive mode fails, the target gear into the second gear of the EV mode, the target gear being the fourth gear of the direct drive mode.

8. The method according to claim 6 or 7, wherein the shifting the target gear into the downshifted gear, comprises:
keeping the target gear unchanged in a case that the current gear is in an ECVT mode or a series mode;
shifting, in a case that the current gear is the first gear of the direct drive mode, the target gear into the first gear of the ECVT mode, the downshifted gear being the first gear of the ECVT mode;
shifting, in a case that the current gear is the second gear of the direct drive mode or the first gear of the EV mode, the target gear into the second gear of the ECVT mode, the downshifted gear being the second gear of the ECVT mode;
shifting, in a case that the current gear is a third gear of the direct drive mode, the target gear into the third gear of the ECVT mode, the downshifted gear being the third gear of the ECVT mode;
shifting, in a case that the current gear is the fourth gear of the direct drive mode or the second gear of the EV mode, the target gear into the fourth gear of the ECVT mode, the downshifted gear being the fourth gear of the ECVT mode.

9. An apparatus for determining a safety strategy, comprising:
a monitoring module, configured for monitoring an environmental signal in a hybrid transmission, the environmental signal comprising at least one of: a voltage signal, a current signal, a temperature signal, a sensor signal, and a positional signal;
a first determining module, configured for determining, in a case that an error occurs in the environmental signal, an abnormal event corresponding to the environmental signal;
a second determining module, configured for analyzing the abnormal event, and determining a safety state corresponding to the abnormal event;
a third determining module, configured for determining a safety strategy corresponding to the abnormal event on the basis of the safety state and a current gear of vehicle, the current gear comprising a gear of different driving modes, and wherein the safety strategy comprises at least one of: maintaining the current gear, reverting a gear of the hybrid transmission into the current gear, and shifting the current gear into a corresponding downshifted gear;
a first sending module, configured for sending a gear shifting request carrying the safety strategy to a Vehicle Electronic Control Unit (VECU), the gear shifting request being used to request the VECU to switch a target gear on the basis of the safety strategy; and
a first shifting module, configured for shifting the gear of the hybrid transmission into the target gear.

10. An apparatus for determining a safety strategy, comprising:
a first receiving module, configured for receiving a gear shifting request carrying a safety strategy sent by a Hybrid Transmission Control Unit (HTCU), the safety strategy being determined according to a safety state corresponding to an abnormal event and a current gear of vehicle, the abnormal event corresponding to an error occurring to an environmental signal in a hybrid transmission, the current gear comprising one gear of different driving modes;
a second shifting module, configured for maintaining, in a case that the safety strategy is to maintain the current gear, a target gear unchanged;
a third shifting module, further configured for shifting, in a case that the safety strategy is to revert the gear of the hybrid transmission into the current gear, the target gear into the current gear;
a fourth shifting module, further configured for shifting, in a case that the safety strategy is to shift the current gear into a corresponding downshifted gear, the target gear into the downshifted gear.
